# EUROPEAN PATENT SPECIFICATION

(11) **EP 2 584 745 B1**
(45) Date of publication and mention of the grant of the patent: **07.03.2018**
(21) Application number: 11186158.9
(22) Date of filing: 21.10.2011
(51) Int. Cl.: H04L 12/58

(54) **Determining and conveying contextual information for real time text**
Bestimmung und Versendung kontextueller Informationen für einen Echtzeittext
Détermination et transfert d'informations contextuelles pour texte en temps réel

(43) Date of publication of application: 24.04.2013
(73) Proprietor: BlackBerry Limited, Waterloo, ON N2K 0A7 (CA)
(72) Inventor: Gammon, Scott, Waterloo, Ontario N2L 3W8 (CA)
(74) Representative: Noble, Nicholas

(56) References cited:
- EP-A1- 2 117 218
- US-A1- 2009 048 845
- US-A1- 2010 228 546
- US-B1- 6 175 820

## Description

### BACKGROUND

The present application relates in one aspect to mobile device communication, and to provision of real time text capabilities, and more particularly to providing real time text capabilities to mobile devices.

Mobile devices are used for voice and data communications. Even as communications have become richer, such as by increased use of video conferencing, non-verbal communications remains an important way to communicate information. Real time text allows an experience of being able to convey text from a source to a destination practically instantaneously. Additional capabilities relating to text transmission and display remain desirable.

US 2010/228546 describes a system and methods for providing SIP based voice transcription services. A computer implemented method includes: transcribing a Session Initiation Protocol (SIP) based conversation between one or more users from voice to text transcription; identifying each of the one or more users that are speaking using a device SIP_ID of the one or more users; marking the identity of the one or more users that are speaking in the text transcription; and providing the text transcription of the speaking user to non-speaking users.

The invention is set out in the claims.

### BRIEF DESCRIPTION OF THE DRAWINGS

Reference will now be made, by way of example, to the accompanying drawings which show example embodiments of the present application, and in which:
Figure 1 depicts a context and components of a Real Time Text (RTT) system in which aspects of the description can be practiced;
Figure 2 depicts components of a RTT server in which voices can be recognized by a machine and resulting text can be provided via a real-time text solution, with added context information according to the examples;
Figure 3 depicts an example process that can be performed by an RTT server according to the disclosure of Figure 2;
Figure 4 depicts an example process that can be performed for receiving and processing RTT packets by an RTT server, such as those depicted in Figure 1;
Figure 5 depicts RTT packets that can be provided with additional context information, such as graphical rendition information according to ITU T.140;
Figure 6 depicts an example display in which RTT information can be provided with additional context information introduced into the RTT by an RTT server according to the disclosure;
Figures 7 and 8 depicts a further example of RTT information display, in which text from two recognized speakers are displayed in different windows; and
Figure 9 depicts example constituent components of a device, portions of which can be used to implement RTT systems according to the disclosure, and components thereof, such as RTT servers and clients.

### DESCRIPTION

Mobile devices are increasingly used for communication, such as voice calling and data exchange. Mobile devices also can be used for receiving text information. There are a variety of text-based approaches to information exchange that can be used with mobile devices. One common example is Short Message System (SMS) textual information. Another example is Real Time Text (RTT), which by contrast with SMS, allows near to real time input of text at a first device, communication over a network (using a RTP/UDP) and remote display of such text information at a second device.

It would be beneficial to extend RTT technology to allow greater contextual information to be conveyed for certain types of usage models. One usage model is where machine language recognition is being performed on an audio signal that contains human voices, and the output from the machine language recognition operation is used as text to be transmitted using RTT. In many practical situations of interest, the audio signal may contain a plurality of human voices (i.e., different speakers). Also, the manner of speech of the speakers can change over time; for example, volume, tone, and other dynamic qualities of speech would be apparent to a person listening to the audio signal. In some of the following aspects, further control and contextual information is determined from the audio signal, and used to determine commands or other display parameter information that is useful for a remote viewer, seeing only the text, to understand more of the contextual information present in the original audio signal.

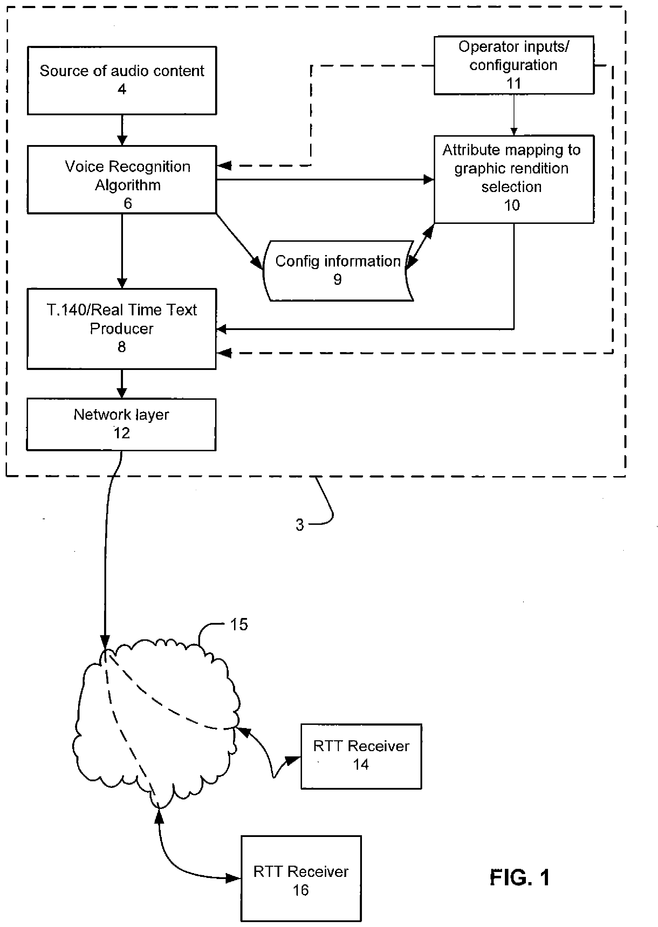

To that end, Figure 1 depicts an RTT source 3, which comprises a source of audio content 4. The source of audio content 4 can be a recorded or live audio feed, for example. For example, the audio content 4 can be the audio track from a video broadcast, or can be the recorded audio from a teleconference session, and so on. Source of audio content 4 can perform the audio content as though it were to be consumed by a human (e.g., through a receiver and speaker, not depicted), so as to provide output in an analog or in a digital format, for example. A voice recognition algorithm 6 receives the audio information from the source of audio content 4, and performs voice recognition on the audio information. Alternatively, stored data can be accessed directly from a computer readable medium and processed by voice recognition algorithm 6. Voice recognition algorithm 6 can generate information that can be used throughout an RTT session. For example, voice recognition algorithm 6 can recognize a new speaker, and add that new speaker to a list of recognized speakers. As will be described below, different font colors can be allocated to different speakers. In addition to producing text output, voice recognition algorithm 6 can output information about the context of text being recognized. For example, a relative volume of a given word or phrase can be determined, and outputted to an attribute mapping function 10. Attribute mapping function 10, as alluded to above, can receive contextual outputs from voice recognition algorithm 6, and use those contextual outputs in determining graphical rendition selections for portions of text to which the context outputs apply. The textual output and the graphical rendition selections are fed into a real time text producer 8, which can operate according to ITU T. 140. T.140 is based on the ISO 10646-1 character set and uses the UTF-8 format/encoding for such character set.

Output of producer 8 can be fed into a network layer 12. Network layer 12 can comprise a transport stack, an addressing layer, media access control and physical layer functionality. In one example, the transport/addressing functionality can be provided through UDP/IP. RTT source 3 also can comprise an operator inputs/configuration source 11. For example, an operator can assist in initially identifying speakers present in a given source of audio content. For example, these configuration inputs can associate a textual name for a given speaker, such that attribute mapping can supply the name when the voice recognition algorithm identifies the speaker associated with the name to the attribute mapper 10.

Outputs from RTT source 3 are provided over an internet 15 to RTT receivers 14 and 16. These receivers can function according to the examples provided below to display the provided text information and use the associated graphical rendition selections during such display.

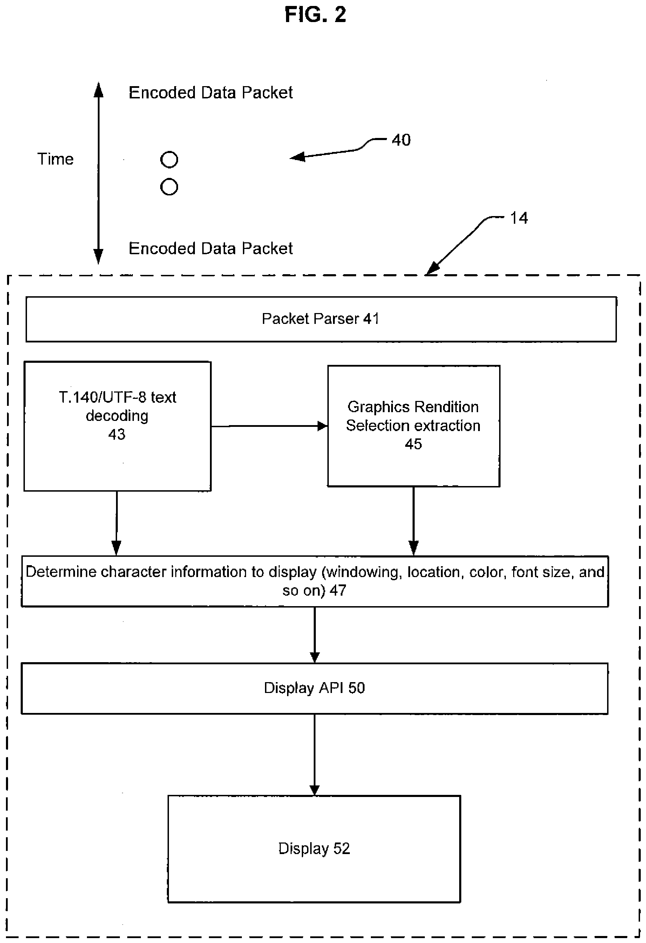

Figure 2 depicts an example where a sequence of encoded packets (collectively 40) is provided to RTT receiver 14. RTT receiver 14 in this example is depicted as having functional units comprising a packet parser 41, which extracts information from the packets that can be used by T.140/UTF-8 text decoder 43, and graphics rendition selection extractor 45. Decoder 43 and extractor 45 provide outputs to a module that integrates the text information and the graphics rendition selection into specific text and formatting to be displayed.

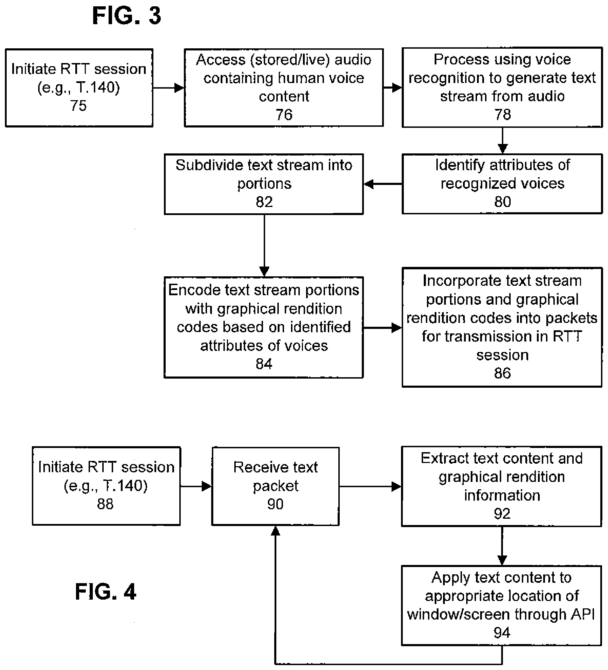

Figure 3 depicts an example procedure that can be implemented in RTT source 3. The procedure comprises initiating (75) an RTT session. In one example, an RTT session can be initiated using the Session Initiation Protocol (SIP) with a Session Description Protocol (SDP) specifying a text session (e.g., media type of text).

Given that an RTT session is established, RTT source 3 can access (76) stored or live audio containing human voice content. The human voice content is processed (78) to generate a text stream from the audio. Attributes are identified (80) for the recognized voices, such as distinguishing between or among the speakers recognized in the audio. Information stored in configuration information 9 can be used in such attribute mapping. For example, by being able to make a running list of detected speakers, a recurrent or subsequent utterance from a recognized speaker can be more reliably mapped to a particular graphical rendition selection (e.g., a particular font color or text insert). The text stream can be subdivided (82) into portions and encoded with graphical rendition codes that can be interpreted to indicate differences in presentation of the text in the subdivided portions. Given that one usage of the present technology is presenting text information from recorded or live audio, the rate at which text is presented may be faster than what is typical for typing or other RTT usages. As such, the portions of text transmitted in any given RTT packet may be larger than typical, and can comprise, for example, a series of words or a sentence, and may not be a character by character flow. RTT source 3 can be configured, for example, to dispatch RTT packets on a regular cycle, such as every second, every 2 seconds, or another interval determined to be appropriate for the application. The text stream portions and the graphical rendition codes are then incorporated (86) into packets for transmission in the RTT session to the RTT clients, as described above.

Figure 4 depicts an example process for decoding and presenting text portions received in an RTT session at a RTT client. Here, the example process includes initiating an RTT session in cooperation with an RTT source, e.g., RTT source 3. During the session, RTT packets can be received (90), text content and graphical rendition information can be extracted (92) and the text content can be applied to an appropriate location of a window or windows or otherwise displayed (94). An API may be access in order to draw or output such text. Further exemplary information concerning this process is found below.

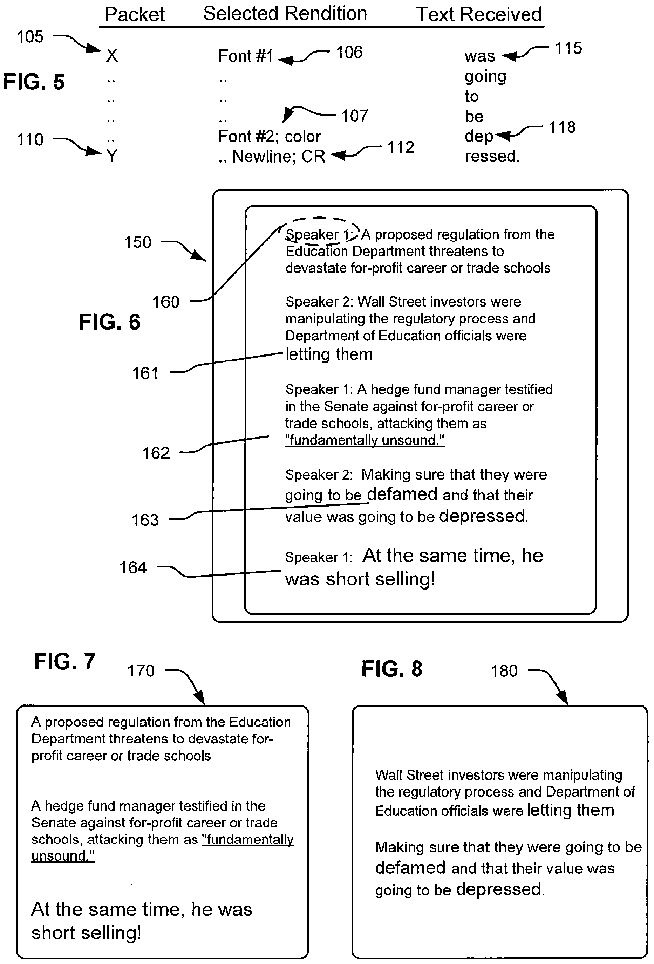

Figure 5 depicts a series of packets 105...110 each with respective graphic rendition information 106... 112 and received text 115...118 (not all packets need to have graphical rendition information, and in one aspect, where a packet does not include any such information, the previous state of the text displayed is carried forward unmodified). The graphical rendition information 106 includes a selected font (font #1), and exemplary rendition information 107 includes a second selected font, and a color change. Rendition information 112 includes a line feed and carriage return.

Figure 6 depicts an example text display 150 in which recognized text from two speakers (speaker 1 and speaker 2) has been transmitted and displayed. The identification text 160 for speaker 1 can be inserted as text into the RTT stream and displayed as any other text (as can the identification information for speaker 2, and so on, each time that there is a detected change in speaker, as described above). Font size differences 161-164 depict examples of changing font size by word or by sentence to convey context information concerning how those particular text portions were spoken in the audio version. Display 150 also depicts a combined view in which both speaker text is presented in the same window. Because RTP can be used to transmit the text packets, RTP can be used to ensure an in-order display of such text.

Figure 7 and Figure 8 depict a situation where the text for each speaker can be split into two different windows 170 and 180 according to speaker. In one approach, the text identifying the speaker can be used as a trigger to determine which window the text should be displayed in, and then can be redacted. As described above, colors of the text displayed also can be used to indicate any one or more of a variety of conditions or sources of a given word or line or group of lines of text.

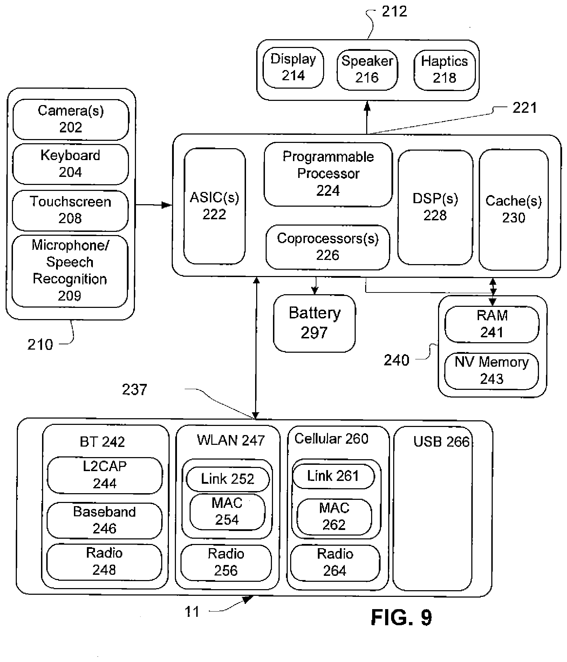

Figure 9 depicts example components that can be used in implementing mobile device 11 according to the above description. Figure 2 depicts that a processing module 221 may be composed of a plurality of different processing elements, including one or more ASICs 222, a programmable processor 224, one or more co-processors 226, which each can be fixed function, reconfigurable or programmable, and one or more digital signal processors 228. For example, an ASIC or co-processor 222 may be provided for implementing graphics functionality, encryption and decryption, audio filtering, and other such functions that often involve many repetitive, math-intensive steps. Processing module 221 can comprise memory to be used during processing, such as one or more cache memories 230.

Processing module 221 communicates with mass storage 240, which can be composed of a Random Access Memory 241 and of non-volatile memory 243. Non-volatile memory 243 can be implemented with one or more of Flash memory, PROM, EPROM, and so on. Non-volatile memory 243 can be implemented as flash memory, ferromagnetic, phase-change memory, and other non-volatile memory technologies. Non-volatile memory 243 also can store programs, device state, various user information, one or more operating systems, device configuration data, and other data that may need to be accessed persistently. A battery 297 can power device 11 occasionally, or in some cases, it can be a sole source of power. Battery 297 may be rechargeable.

User input interface 210 can comprise a plurality of different sources of user input, such as a camera 202, a keyboard 204, a touchscreen 208, and a microphone, which can provide input to speech recognition functionality 209. Output mechanisms 212 can include a display 214, a speaker 216 and haptics 218, for example. These output mechanisms 212 can be used to provide a variety of outputs that can be sensed by a human, in response to information provided from processing module 221.

Processing module 221 also can use a variety of network communication protocols, grouped for description purposes here into a communication module 237, which can include a Bluetooth communication stack 242, which comprises a L2CAP layer 244, a baseband 246 and a radio 248. Communications module 237 also can comprise a Wireless Local Area Network (247) interface, which comprises a link layer 252 with a MAC 254, and a radio 256. Communications module 237 also can comprise a cellular broadband data network interface 260, which in turn comprises a link layer 261, with a MAC 262. Cellular interface 260 also can comprise a radio 264 for an appropriate frequency spectrum. Communications module 237 also can comprise a USB interface 266, to provide wired data communication capability. Other wireless and wired communication technologies also can be provided, and this description is exemplary.

In the foregoing, separate boxes or illustrated separation of functional elements of illustrated systems does not necessarily require physical separation of such functions, as communications between such elements can occur by way of messaging, function calls, shared memory space, and so on, without any such physical separation. As such, functions need not be implemented in physically or logically separated platforms, although they are illustrated separately for ease of explanation herein.

For example, different embodiments of devices can provide some functions in an operating system installation that are provided at an application layer or in a middle layer in other devices. Different devices can have different designs, such that while some devices implement some functions in fixed function hardware, other devices can implement such functions in a programmable processor with code obtained from a computer readable medium.

Further, some aspects may be disclosed with respect to only certain examples. However, such disclosures are not to be implied as requiring that such aspects be used only in embodiments according to such examples.

The above description occasionally describes relative timing of events, signals, actions, and the like as occurring "when" another event, signal, action, or the like happens. Such description is not to be construed as requiring a concurrency or any absolute timing, unless otherwise indicated.

Certain adaptations and modifications of the described embodiments can be made. Aspects that can be applied to various embodiments may have been described with respect to only a portion of those embodiments, for sake of clarity. However, it is to be understood that these aspects can be provided in or applied to other embodiments as well. Therefore, the above discussed embodiments are considered to be illustrative and not restrictive.

## Claims

1. A computer-implemented method for real time text transmission, comprising:
accessing text output generated from a human audio source and metadata concerning characteristics of, and determined from, the human audio source;
determining control commands to be associated with respective portions of the text output based on the metadata, the control commands referring to contextual information and dynamic qualities of the speech associated to the human audio source; forming packets containing the control commands and the associated portions of the text output, wherein the control commands conform to a pre-determined specification;
sending the packets in a real time text session to one or more participant receiving devices.

2. The method of claim 1, wherein the control commands comprise commands for changing font color, and the method further comprises applying a different font color to all text determined to be a particular speaker detected in the human audio source.

3. The method of claim 1 or 2, wherein the control commands comprise commands for changing font size, and the method further comprises applying a larger font size to portions of text output determined to have been spoken at a comparatively loud volume.

4. The method of claim 1, 2, or 3, wherein the control commands comprise commands for changing font size, and the method further comprises applying a smaller font size to portions of text output determined to have been spoken at a comparatively low volume.

5. The method of claim 1, 2, 3, or 4, further comprising distinguishing between different speakers from the human audio source, generating text information responsive to changes in the identity of the speaker, and inserting the generated text information in the packet proximate portions of text output associated with each speaker.

6. The method of claim 1, 2, 3, or 4, further comprising distinguishing between different speakers from the human audio source, and generating a control command indicative, in the pre-defined specification, of a change in speaker and including that control command in a packet containing the first text from a different speaker.

7. A tangible computer readable medium storing instructions for configuring a processor (224) to implement a method of real time text transmission, comprising:
accessing text output generated from a human audio source and metadata concerning characteristics of, and determined from, the human audio source;
determining control commands to be associated with respective portions of the text output based on the metadata, the control commands referring to contextual information and dynamic qualities of the speech associated to the human audio source; forming packets containing the control commands and the associated portions of the text output, wherein the control commands conform to a pre-determined specification;
sending the packets in a real time text session to one or more participant receiving devices.

8. The tangible computer readable medium of claim 7, wherein the control commands comprise commands for changing font color, and the method further comprises applying a different font color to all text determined to be a particular speaker detected in the human audio source.

9. The tangible computer readable medium of claim 7 or 8, wherein the control commands comprise commands for changing font size, and the method further comprises applying a larger font size to portions of text output determined to have been spoken at a comparatively loud volume.

10. The tangible computer readable medium of claim 7, 8, or 9, wherein the control commands comprise commands for changing font size, and the method further comprises applying a smaller font size to portions of text output determined to have been spoken at a comparatively low volume.

11. The tangible computer readable medium of claim 7, 8, 9, or 10, further comprising distinguishing between different speakers from the human audio source, generating text information responsive to changes in the identity of the speaker, and inserting the generated text information in the packet proximate portions of text output associated with each speaker.

12. The tangible computer readable medium of claim 7, 8, 9, or 10, further comprising distinguishing between different speakers from the human audio source, and generating a control code indicative, in the pre-defined specification, of a change in speaker.

13. A mobile device (11), comprising:
a processor (224);
a network interface (260) for communicatively coupling with at least one network;
a tangible computer readable medium storing instructions for configuring the processor (224) to perform a method comprising receiving packets through the network interface (260) in a real time text session;
interpreting data in the packets as portions of text output generated from a human audio source, and control commands associated with respective portions of the text output based on metadata concerning characteristics of, and determined from, the human audio source, wherein the control commands refer to contextual information and dynamic qualities of the speech associated to the human audio source and are identified and interpreted according to a pre-determined specification;
determining text content and graphical modifications to the text content based on the portions of text output and the control commands; and
causing the text content to be rendered with the determined graphical modifications on a display.

14. The mobile device (11) of claim 13, wherein the control commands comprise commands for changing font color, and the instructions are for configuring the processor (224) to apply a different font color to all text associated with a command for changing font color.

15. The mobile device (11) of claim 13 or 14, wherein the control commands comprise commands for changing font size, and the method further comprises applying a larger font size to portions of text output determined to have been spoken at a comparatively loud volume and applying a smaller font size to portions of text output determined to have been spoken at a comparatively low volume.

## Patentansprüche

1. Computerimplementiertes Verfahren zur Echtzeit-Textübertragung, umfassend:
Zugreifen auf eine Textausgabe, die von einer menschlichen Audioquelle erzeugt wird, und auf Metadaten, die Eigenschaften der menschlichen Audioquelle betreffen und aus dieser bestimmt wurden;
Bestimmen von Steuerbefehlen, die jeweiligen Teilen der Textausgabe zugeordnet werden sollen, basierend auf den Metadaten, wobei sich die Steuerbefehle auf kontextuelle Informationen und dynamische Qualitäten der Sprache, die der menschlichen Audioquelle zugeordnet wird, beziehen;
Bilden von Paketen, die die Steuerbefehle und die zugehörigen Teile der Textausgabe enthalten, wobei die Steuerbefehle einer vorbestimmten Spezifikation entsprechen;
Senden der Pakete in einer Echtzeittextsitzung an eines oder mehrere empfangende Teilnehmergeräte.

2. Verfahren nach Anspruch 1, wobei die Steuerbefehle Befehle zum Ändern der Schriftfarbe umfassen und das Verfahren ferner Anwenden einer anderen Schriftfarbe auf den gesamten Text umfasst, der als ein spezieller Sprecher bestimmt wird, der in der menschlichen Audioquelle erfasst wird.

3. Verfahren nach Anspruch 1 oder 2, wobei die Steuerbefehle Befehle zum Ändern der Schriftgröße umfassen und das Verfahren ferner Anwenden einer größeren Schriftgröße auf Teile der Textausgabe umfasst, bezüglich denen bestimmt wird, dass sie mit einem vergleichsweise lauten Volumen gesprochen wurden.

4. Verfahren nach Anspruch 1, 2 oder 3, wobei die Steuerbefehle Befehle zum Ändern der Schriftgröße umfassen und das Verfahren ferner Anwenden einer kleineren Schriftgröße auf Teile der Textausgabe umfasst, bezüglich denen bestimmt wird, dass sie mit einem vergleichsweise geringen Volumen gesprochen wurden.

5. Verfahren nach Anspruch 1, 2, 3 oder 4, ferner umfassend Unterscheiden zwischen unterschiedlichen Sprechern aus der menschlichen Audioquelle, Erzeugen von Textinformationen als Reaktion auf Änderungen der Identität des Sprechers und Einfügen der erzeugten Textinformationen in das Paket in den benachbarten Paketteilen der Textausgabe, die jedem Sprecher zugeordnet werden.

6. Verfahren nach Anspruch 1, 2, 3 oder 4, ferner umfassend Unterscheiden zwischen unterschiedlichen Sprechern aus der menschlichen Audioquelle und Erzeugen eines Steuerbefehls, der in der vordefinierten Spezifikation eine Änderung des Sprechers anzeigt, und Einschließen dieses Steuerbefehls in ein Paket, das den ersten Text von einem anderen Sprecher enthält.

7. Greifbares computerlesbares Medium, das Anweisungen zum Konfigurieren eines Prozessors (224) speichert, um ein Verfahren zur Echtzeit-Textübertragung zu implementieren, umfassend:
Zugreifen auf eine Textausgabe, die von einer menschlichen Audioquelle erzeugt wird, und auf Metadaten, die Eigenschaften der menschlichen Audioquelle betreffen und aus dieser bestimmt wurden;
Bestimmen von Steuerbefehlen, die jeweiligen Teilen der Textausgabe zugeordnet werden sollen, basierend auf den Metadaten, wobei sich die Steuerbefehle auf kontextuelle Informationen und dynamische Qualitäten der Sprache, die der menschlichen Audioquelle zugeordnet wird, beziehen;
Bilden von Paketen, die die Steuerbefehle und die zugehörigen Teile der Textausgabe enthalten, wobei die Steuerbefehle einer vorbestimmten Spezifikation entsprechen;
Senden der Pakete in einer Echtzeittextsitzung an einen oder mehrere empfangende Teilnehmergeräte.

8. Greifbares computerlesbares Medium nach Anspruch 7, wobei die Steuerbefehle Befehle zum Ändern der Schriftfarbe umfassen und das Verfahren ferner Anwenden einer anderen Schriftfarbe auf den gesamten Text umfasst, der als ein spezieller Sprecher bestimmt wird, der in der menschlichen Audioquelle erfasst wird.

9. Greifbares computerlesbares Medium nach Anspruch 7 oder 8, wobei die Steuerbefehle Befehle zum Ändern der Schriftgröße umfassen und das Verfahren ferner Anwenden einer größeren Schriftgröße auf Teile der Textausgabe umfasst, bezüglich denen bestimmt wird, dass sie mit einem vergleichsweise lauten Volumen gesprochen wurden.

10. Greifbares computerlesbares Medium nach Anspruch 7, 8 oder 9, wobei die Steuerbefehle Befehle zum Ändern der Schriftgröße umfassen und das Verfahren ferner Anwenden einer kleineren Schriftgröße auf Teile der Textausgabe umfasst, bezüglichen denen bestimmt wird, dass sie mit einem vergleichsweise geringen Volumen gesprochen wurden.

11. Greifbares computerlesbares Medium nach Anspruch 7, 8, 9 oder 10, ferner umfassend Unterscheiden zwischen unterschiedlichen Sprechern aus der menschlichen Audioquelle, Erzeugen von Textinformationen als Reaktion auf Änderungen der Identität des Sprechers, und Einfügen der erzeugten Textinformationen in das Paket in den benachbarten Paketteilen der Textausgabe, die jedem Sprecher zugeordnet werden.

12. Greifbares computerlesbares Medium nach Anspruch 7, 8, 9 oder 10, ferner umfassend Unterscheiden zwischen unterschiedlichen Sprechern aus der menschlichen Audioquelle und Erzeugen eines Steuerbefehls, der in der vordefinierten Spezifikation eine Änderung des Sprechers anzeigt.

13. Mobiles Gerät (11), umfassend:
einen Prozessor (224);
eine Netzwerkschnittstelle (260) zum kommunikativen Koppeln mit mindestens einem Netzwerk;
ein greifbares computerlesbares Medium, das Anweisungen zum Konfigurieren des Prozessors (224) speichert, um ein Verfahren auszuführen, das umfasst:
Empfangen von Paketen durch die Netzwerkschnittstelle (260) in einer Echtzeittextsitzung;
Interpretieren von Daten in den Paketen als Teile von Textausgaben, die von einer menschlichen Audioquelle erzeugt werden, und Steuerbefehle, die jeweiligen Teilen der Textausgabe zugeordnet sind, basierend auf Metadaten, die Eigenschaften der menschlichen Audioquelle betreffen und aus dieser bestimmt wurden, wobei sich die Steuerbefehle auf kontextuelle Informationen und dynamische Qualitäten der Sprache, die der menschlichen Audioquelle zugeordnet ist, beziehen, und gemäß einer vorgegebenen Spezifikation identifiziert und interpretiert werden;
Bestimmen von Textinhalt und der graphischen Modifikationen des Textinhalts basierend auf den Teilen der Textausgabe und den Steuerbefehlen; und
Bewirken, dass der Textinhalt mit den bestimmten grafischen Modifikationen auf einer Anzeige gerendert wird.

14. Mobiles Gerät (11) nach Anspruch 13, wobei die Steuerbefehle Befehle zum Ändern der Schriftfarbe umfassen und die Anweisungen dazu vorgesehen sind, den Prozessor (224) zu konfigurieren, eine andere Schriftfarbe auf den gesamten Text anzuwenden, der einem Befehl zum Ändern der Schriftfarbe zugeordnet ist.

15. Mobiles Gerät (11) nach Anspruch 13 oder 14, wobei die Steuerbefehle Befehle zum Ändern der Schriftgröße umfassen und das Verfahren ferner umfasst: Anwenden einer größeren Schriftgröße auf Teile von Textausgaben, bezüglich denen bestimmt wird, dass sie mit einem vergleichsweise lautem Volumen gesprochen wurden, und Anwenden einer kleineren Schriftgröße auf Teile der Textausgabe, bezüglich denen bestimmt wird, dass sie mit einem vergleichsweise geringen Volumen gesprochen wurden.

## Revendications

1. Procédé implémenté par ordinateur pour transmission textuelle en temps réel, comprenant :
l'accès à une sortie textuelle générée à partir d'une source audio humaine et des métadonnées concernant des caractéristiques de la source audio humaine, et déterminées à partir de celle-ci ;
la détermination de commandes de contrôle destinées à être associées à des portions respectives de la sortie textuelle en fonction des métadonnées, les commandes de contrôle faisant référence à des informations contextuelles et des qualités dynamiques de la parole associée à la source audio humaine ;
la formation de paquets contenant les commandes de contrôle et les portions associées de la sortie textuelle, dans lequel les commandes de contrôle se conforment à une spécification prédéterminée ;
l'envoi des paquets, dans une session en temps réel, à un ou plusieurs dispositifs récepteurs participants.

2. Procédé selon la revendication 1, dans lequel les commandes de contrôle comprennent des commandes pour changer la couleur de police, et le procédé comprend en outre l'application d'une couleur de police différente sur la totalité du texte, déterminé comme étant un locuteur particulier détecté dans la source audio humaine.

3. Procédé selon la revendication 1 ou 2, dans lequel les commandes de contrôle comprennent des commandes pour changer la taille de police, et le procédé comprend en outre l'application d'une taille de police plus grande sur des portions de sortie textuelle déterminées comme ayant été dites à un volume comparativement fort.

4. Procédé selon la revendication 1, 2, ou 3, dans lequel les commandes de contrôle comprennent des commandes pour changer la taille de police, et le procédé comprend en outre l'application d'une taille de police plus petite sur des portions de sortie textuelle déterminées comme ayant été dites à un volume comparativement bas.

5. Procédé selon la revendication 1, 2, 3, ou 4, comprenant en outre la distinction entre différents locuteurs de la source audio humaine, la génération d'informations textuelles en réponse à des changements de l'identité du locuteur, et l'insertion des informations textuelles générées dans le paquet à proximité de portions de sortie textuelle associées à chaque locuteur.

6. Procédé selon la revendication 1, 2, 3, ou 4, comprenant en outre la distinction entre différents locuteurs de la source audio humaine, et la génération d'une commande de contrôle indicative, dans la spécification prédéfinie, d'un changement de locuteur et l'inclusion de cette commande de contrôle dans un paquet contenant le premier texte d'un locuteur différent.

7. Support tangible lisible par ordinateur stockant des instructions pour configurer un processeur (224) pour implémenter un procédé de transmission textuelle en temps réel, comprenant :
l'accès à une sortie textuelle générée à partir d'une source audio humaine et des métadonnées concernant des caractéristiques de la source audio humaine, et déterminées à partir de celle-ci ;
la détermination de commandes de contrôle destinées à être associées à des portions respectives de la sortie textuelle en fonction des métadonnées, les commandes de contrôle faisant référence à des informations contextuelles et des qualités dynamiques de la parole associée à la source audio humaine ;
la formation de paquets contenant les commandes de contrôle et les portions associées de la sortie textuelle, dans lequel les commandes de contrôle se conforment à une spécification prédéterminée ;
l'envoi des paquets, dans une session en temps réel, à un ou plusieurs dispositifs récepteurs participants.

8. Support tangible lisible par ordinateur selon la revendication 7, dans lequel les commandes de contrôle comprennent des commandes pour changer la couleur de police, et le procédé comprend en outre l'application d'une couleur de police différente sur la totalité d'un texte, déterminé comme étant un locuteur particulier détecté dans la source audio humaine.

9. Support tangible lisible par ordinateur selon la revendication 7 ou 8, dans lequel les commandes de contrôle comprennent des commandes pour changer la taille de police, et le procédé comprend en outre l'application d'une taille de police plus grande sur des portions de sortie textuelle déterminées comme ayant été dites à un volume comparativement fort.

10. Support tangible lisible par ordinateur selon la revendication 7, 8, ou 9, dans lequel les commandes de contrôle comprennent des commandes pour changer la taille de police, et le procédé comprend en outre l'application d'une taille de police plus petite sur des portions de sortie textuelle déterminées comme ayant été dites à un volume comparativement bas.

11. Support tangible lisible par ordinateur selon la revendication 7, 8, 9, ou 10, comprenant en outre la distinction entre différents locuteurs de la source audio humaine, la génération d'informations textuelles en réponse à des changements de l'identité du locuteur, et l'insertion des informations textuelles générées dans le paquet à proximité de portions de sortie textuelle associées à chaque locuteur.

12. Support tangible lisible par ordinateur selon la revendication 7, 8, 9, ou 10, comprenant en outre la distinction entre différents locuteurs de la source audio humaine, et la génération d'un code de commande indicatif, dans la spécification prédéfinie, d'un changement de locuteur.

13. Dispositif mobile (11), comprenant :
un processeur (224) ;
une interface de réseau (260) destinée à être couplée, en communication, à au moins un réseau ;
un support tangible lisible par ordinateur stockant des instructions pour configurer le processeur (224) pour réaliser un procédé comprenant :
la réception de paquets par l'intermédiaire de l'interface de réseau (260), dans une session en temps réel ;
l'interprétation de données dans les paquets comme étant des portions de sortie textuelle générées à partir d'une source audio humaine, et de commandes de contrôle associées à des portions respectives de la sortie textuelle en fonction de métadonnées concernant des caractéristiques de la source audio humaine, et déterminées à partir de celle-ci, dans lequel les commandes de contrôle font référence à des informations contextuelles et des qualités dynamiques de la parole associée à la source audio humaine et sont identifiées et interprétées selon une spécification prédéterminée ;
la détermination de contenu textuel et de modifications graphiques du contenu textuel en fonction des portions de sortie textuelle et les commandes de contrôle ; et
l'entraînement du rendu du contenu textuel, avec les modifications graphiques déterminées, sur un écran d'affichage.

14. Dispositif mobile (11) selon la revendication 13, dans lequel les commandes de contrôle comprennent des commandes pour changer la couleur de police, et les instructions sont destinées à configurer le processeur (224) pour appliquer une couleur de police différente sur la totalité du texte associé à une commande pour changer la couleur de police.

15. Dispositif mobile (11) selon la revendication 13 ou 14, dans lequel les commandes de contrôle comprennent des commandes pour changer la taille de police, et le procédé comprend en outre l'application d'une taille de police plus grande sur des portions de sortie textuelle déterminées comme ayant été dites à un volume comparativement fort et l'application d'une taille de police plus petite sur des portions de sortie textuelle déterminées comme ayant été dites à un volume comparativement bas.
